(19) Europäisches Patentamt
European Patent Office
Office européen des brevets

(11) **EP 4 524 627 A1**

(12) **EUROPEAN PATENT APPLICATION**

(43) Date of publication:
**19.03.2025 Bulletin 2025/12**

(21) Application number: **24201010.6**

(22) Date of filing: **18.09.2024**

(51) International Patent Classification (IPC):
*G02B 6/036* (2006.01)    *C03B 37/014* (2006.01)
*C03B 37/018* (2006.01)

(52) Cooperative Patent Classification (CPC):
**G02B 6/0365; G02B 6/03627**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.09.2023 US 202363538922 P**
**12.10.2023 NL 2036016**

(71) Applicant: **Corning Incorporated
Corning, New York 14831 (US)**

(72) Inventors:
• **Khrapko, Rostislav Radiyevich
Corning NY 14831 (US)**
• **Ming-Jun, Li
Corning NY 14831 (US)**
• **Logunov, Stephan Lvovich
Corning NY 14831 (US)**
• **Nie, Craig Daniel
Corning NY 14831 (US)**

(74) Representative: **Arnold & Siedsma
Bezuidenhoutseweg 57
2594 AC The Hague (NL)**

(54) **OPTICAL FIBER WITH REDUCED ATTENUATION**

(57)    An optical fiber that includes a silica core and a cladding surrounding the core is disclosed, the optical fiber having a low attenuation. In embodiments, the optical fiber has an attenuation at 1550 nm of about 0.1420 dB/km. Furthermore, the diameter of the core may be larger than a fundamental mode field diameter of the optical fiber at a wavelength of 1550 nm. In embodiments, the core is doped with an alkali dopant.

FIG. 1

EP 4 524 627 A1

**Description**

## FIELD OF THE DISCLOSURE

This disclosure pertains to optical fibers with reduced attenuation. More particularly, this disclosure pertains to alkali doped optical fibers with reduced attenuation.

## BACKGROUND OF THE DISCLOSURE

Optical fibers have acquired an increasingly important role in the field of communications and operate by propagating a beam of light. Typically an optical fiber comprises a core and cladding. The core is used to propagate the light, and the cladding is used to contain the light within the core through reflection.

Optical fibers must operate within very specific waveguide parameters, including low attenuation loss, in order to transmit a signal over long distances and within a short period of time. Attenuation is the loss of a signal within the optical fiber. Therefore, attenuation of an optical fiber is a measure of the amount of light loss between an input and output of the fiber. The attenuation of an optical fiber is a result of the fiber's absorption, scattering properties, and bending losses, which are each influenced by the materials of the fiber and the fiber structure itself.

## SUMMARY

Aspects of the present disclosure provide an optical fiber with reduced attenuation. For example, and as discussed further below, aspects of the present disclosure include increasing the percentage of light of the fundamental mode confined to the core and reducing the percentage of light of the fundamental mode in the fluorine doped cladding of the optical fiber in order to reduce the overall attenuation of the fiber. Therefore, in embodiments, the light propagating within the optical fiber is confined to the fundamental mode within the core in order to reduce Rayleigh scattering and small angle scattering, both of which contribute to increased attenuation.

Embodiments of the present disclosure are directed to an optical fiber comprising a core comprised of silica and cladding surrounding the core, wherein the optical fiber has an attenuation at 1550 nm of about 0.1420 dB/km or less.

Embodiments of the present disclosure are directed to an optical fiber comprising a core comprised of silica doped with an alkali dopant and cladding surrounding the core, wherein a diameter of the core is larger than a fundamental mode field diameter of the optical fiber at a wavelength of 1550 nm, and wherein the optical fiber has an attenuation at 1550 nm of about 0.146 dB/km or less.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

The accompanying drawings are included to provide a further understanding and are incorporated in and constitute a part of this specification. The drawings are illustrative of selected aspects of the present disclosure, and together with the description serve to explain principles and operation of methods, products, and compositions embraced by the present disclosure.

## BRIEF DESCRIPTION OF THE DRAWINGS

FIG. 1 is a schematic, cross-sectional view of an optical fiber, according to embodiments of the present disclosure;
FIG. 2A depicts a relative refractive index profile of an optical fiber, according to embodiments of the present disclosure;
FIG. 2B depicts another relative refractive index profile of an optical fiber, according to embodiments of the present disclosure;
FIG. 3 is a plot of total Rayleigh scattering loss vs. wavelength of an optical fiber according to embodiments of the present disclosure and of comparative fibers;
FIG. 4 is a plot of density variations vs. radial position for an optical fiber;
FIG. 5 is a plot of percent optical power in the core of an optical fiber vs. cable cutoff wavelength of an optical fiber, according to embodiments of the present disclosure;
FIG. 6 is a plot of attenuation vs. cable cutoff wavelength of an optical fiber, according to embodiments of the present disclosure;

FIG. 7 is a plot of fluorine dopant overlap vs. mode field diameter of the fundamental mode, according to embodiments of the present disclosure;

FIG. 8 is a plot of fluorine dopant overlap vs. cable cutoff wavelength, according to embodiments of the present disclosure; and

FIG. 9 is a plot of fluorine dopant overlap vs. the ratio of core diameter over mode field diameter of the fundamental mode, according to embodiments of the present disclosure; and

FIG. 10 is a schematic diagram of an exemplary optical fiber drawing system used to fabricate an optical fiber, according to embodiments of the present disclosure.

## DETAILED DESCRIPTION

The present disclosure is provided as an enabling teaching and can be understood more readily by reference to the following description, drawings, examples, and claims. To this end, those skilled in the relevant art will recognize and appreciate that many changes can be made to the various aspects of the embodiments described herein, while still obtaining the beneficial results. It will also be apparent that some of the desired benefits of the present embodiments can be obtained by selecting some of the features without utilizing other features. Accordingly, those who work in the art will recognize that many modifications and adaptations are possible and can even be desirable in certain circumstances and are a part of the present disclosure. Therefore, it is to be understood that this disclosure is not limited to the specific compositions, articles, devices, and methods disclosed unless otherwise specified. It is also to be understood that the terminology used herein is for the purposes of describing particular aspects only and is not intended to be limiting.

In this specification and in the claims that follow, reference will be made to a number of terms which shall be defined to have the following meanings:

As used herein, "ppm" refers to parts per million by weight.

"Optical fiber" refers to a waveguide having a glass portion, wherein the glass portion includes at least a core portion.

The term "dopant" as used herein generally refers to a substance that changes the relative refractive index of glass relative to pure (undoped) $SiO_2$ unless otherwise indicated.

"Radial position", "radius", or the radial coordinate "r" refers to radial position relative to the centerline (r = 0) of the fiber.

"Refractive index" refers to the refractive index at a wavelength of 1550 nm, unless otherwise specified.

The "refractive index profile" is the relationship between refractive index or relative refractive index and radius. For relative refractive index profiles depicted herein as having step boundaries between adjacent core and/or cladding regions, normal variations in processing conditions may preclude obtaining sharp step boundaries at the interface of adjacent regions. It is to be understood that although boundaries of refractive index profiles may be depicted herein as step changes in refractive index, the boundaries in practice may be rounded or otherwise deviate from perfect step function characteristics. It is further understood that the value of the relative refractive index may vary with radial position within the core region and/or any of the cladding regions. When relative refractive index varies with radial position in a particular region of the fiber (e.g. core region and/or any of the cladding regions), it is expressed in terms of its actual or approximate functional dependence, or its value at a particular position within the region, or in terms of an average value applicable to the region as a whole. Unless otherwise specified, if the relative refractive index of a region (e.g. core region and/or any of the cladding regions) is expressed as a single value or as a parameter (e.g. $\Delta$ or $\Delta\%$) applicable to the region as a whole, it is understood that the relative refractive index in the region is constant, or approximately constant, and corresponds to the single value, or that the single value or parameter represents an average value of a non-constant relative refractive index dependence with radial position in the region. For example, if "i" is a region of the glass fiber, the parameter $\Delta_i$ refers to the average value of relative refractive index in the region as defined by Eq. (1) below, unless otherwise specified. Whether by design or a consequence of normal manufacturing variability, the dependence of relative refractive index on radial position may be sloped, curved, or otherwise non-constant.

"Relative refractive index," as used herein, is the relative refractive index change in percent, which is defined in Eq. (1) as:

$$\Delta_i(r_i)\% = 100 \frac{\left(n_i^2 - n_{ref}^2\right)}{2n_i^2} \tag{1}$$

where $n_i$ is the refractive index at radial position $r_i$ in the glass fiber, unless otherwise specified, and $n_{ref}$ is the refractive index of pure silica glass, unless otherwise specified. Accordingly, as used herein, the relative refractive index percent is relative to pure silica glass, which has a value of 1.444 at a wavelength of 1550 nm. As used herein, the relative refractive index is represented by $\Delta$ (or "delta") or $\Delta\%$ (or "delta %") and its values are given in units of "%", unless otherwise specified.

Relative refractive index may also be expressed as $\Delta(r)$ or $\Delta(r)\%$.

The average relative refractive index ($\Delta_{ave}$) of a region of the fiber is determined from Eq. (2):

$$\Delta_{ave} = \int_{r_{inner}}^{r_{outer}} \frac{\Delta(r)dr}{(r_{outer} - r_{inner})} \tag{2}$$

where $r_{inner}$ is the inner radius of the region, $r_{outer}$ is the outer radius of the region, and $\Delta(r)$ is the relative refractive index of the region.

The refractive index of an optical fiber profile may be measured using commercially available devices, such as the IFA-100 Fiber Index Profiler (Interfiber Analysis LLC, Sharon, MA USA) or the S14 Refractive Index Profiler (Photon Kinetics, Inc., Beaverton, OR USA). These devices measure the refractive index relative to a measurement reference index, $n(r) - n_{meas}$, where the measurement reference index $n_{meas}$ is typically a calibrated index matching oil or pure silica glass. The measurement wavelength may be 632.5 nm, 654 nm, 677.2 nm, 654 nm, 702.3 nm, 729.6 nm, 759.2 nm, 791.3 nm, 826.3 nm, 864.1 nm, 905.2 nm, 949.6 nm, 997.7 nm, 1050 nm, or any wavelength therebetween. The absolute refractive index $n(r)$ is then used to calculate the relative refractive index as defined by Eq. (1).

The term "a-profile" or "alpha profile" refers to a relative refractive index profile $\Delta(r)$ that has the functional form defined in Eq. (3):

$$\Delta(r) = \Delta(r_0)\left[1 - \left[\frac{|r - r_0|}{(r_z - r_0)}\right]^{\alpha}\right] \tag{3}$$

where $r_o$ is the radial position at which $\Delta(r)$ is maximum, $\Delta(r_0) > 0$, $r_z > r_0$ is the radial position at which $\Delta(r)$ decreases to its minimum value, and r is in the range $r_i \leq r \leq r_f$, where $r_i$ is the initial radial position of the $\alpha$-profile, $r_f$ is the final radial position of the $\alpha$-profile, and $\alpha$ is a real number. $\Delta(r_0)$ for an $\alpha$-profile may be referred to herein as $\Delta_{max}$ or, when referring to a specific region i of the fiber, as $\Delta_{imax}$. When the relative refractive index profile of the fiber core region is described by an $\alpha$-profile with $r_0$ occurring at the centerline (r = 0), $r_z$ corresponding to the outer radius $r_1$ of the core region, and $\Delta_1(r_1) = 0$, Eq. (3) simplifies to Eq. (4):

$$\Delta_1(r) = \Delta_{1max}\left[1 - \left[\frac{r}{r_1}\right]^{\alpha}\right] \tag{4}$$

When the core region has an index described by Eq. (4), the outer radius $r_1$ can be determined from the measured relative refractive index profile by the following procedure. Estimated values of the maximum relative refractive index $\Delta_{1max}$, $\alpha$, and outer radius $r_{1est}$ are obtained from inspection of the measured relative refractive index profile and used to create a trial function $\Delta_{trial}$ between $r = -r_{1est}$ and $r = r_{1est}$.

"Effective area" of an optical fiber is defined in Eq. (5):

$$A_{eff} = \frac{2\pi\left[\int_0^{\infty}(f(r))^2 r\,dr\right]^2}{\int_0^{\infty}(f(r))^4 r\,dr} \tag{5}$$

where $f(r)$ is the transverse component of the electric field of the guided optical signal and r is radial position in the fiber. "Effective area" or "$A_{eff}$" depends on the wavelength of the optical signal and is understood herein to refer to a wavelength of 1550 nm.

The term "attenuation," as used herein, is the loss of optical power as the signal travels along the optical fiber. Attenuation is measured as specified by the IEC-60793-1-40 standard, "Attenuation measurement methods" by launching only the fundamental mode through the fiber and measuring the attenuation of the light exiting the fiber at the other end of the fiber.

"Cable cutoff wavelength," or "cable cutoff," as used herein, refers to the 22 m cable cutoff test as specified by the IEC 60793-1-44 standard, "Measurement methods and test procedures - Cut-off wavelength."

The term "mode" is short for a guided mode or optical mode. A "multimode" optical fiber means an optical fiber designed to support the fundamental guided mode and at least one higher-order guided mode over a substantial length of the optical fiber, such as 2 meters or longer. A "single-mode" optical fiber is an optical fiber designed to support a fundamental guided mode over a substantial length of the optical fiber, such as 2 meters or longer. A "few-mode" or "few-moded" optical fiber is an optical fiber designed to support the fundamental guided mode and one or two higher-order modes over a substantial length of the optical fiber, such as 2 meters or longer. A "quasi-single mode" fiber is distinguished from a "few-mode" fiber in that a "quasi-single mode" fiber seeks to use only the fundamental mode to carry information while the "few-mode" fiber uses all of the few modes to carry information.

The number of propagating modes and their characteristics in a cylindrically symmetric optical fiber, with an arbitrary refractive index profile, is obtained by solving the scalar wave equation (see for example T. A. Lenahan, "Calculation of modes in an optical fiber using a finite element method and EISPACK," Bell Syst. Tech. J., vol. 62, no. 1, p. 2663, February 1983). The light traveling in an optical fiber is usually described (approximately) in terms of combinations of LP (linear polarization) modes. The $LP_{op}$ modes with p>0 have two polarization degrees of freedom and are two-fold degenerate. The $LP_{mp}$ modes with m>0 and p>0 have both two polarization and two spatial degrees of freedom. They are four-fold degenerate. In the embodiments disclosed herein, polarization degeneracies are not counted when designating the number of LP modes propagating in the fiber. For example, an optical fiber in which only the $LP_{01}$ mode propagates is a single-mode fiber, even though the $LP_{01}$ mode has two possible polarizations. A few-mode (or "few-moded") optical fiber in which the Loi and LPn modes propagate supports three spatial modes but nevertheless is referred herein as having two modes for ease of discussion.

The "mode field diameter" or "MFD" of an optical fiber is determined from Eq. (6):

$$MFD = 2w$$

$$w^2 = 2\frac{\int_0^\infty \left(f(r)\right)^2 r\,dr}{\int_0^\infty \left(\frac{df(r)}{dr}\right)^2 r\,dr} \tag{6}$$

where f(r) is the transverse component of the electric field distribution of the guided optical signal and is calculated from the refractive index profile of the fiber, as is known in the art, and r is radial position in the fiber. "Mode field diameter" or "MFD" depends on the wavelength of the optical signal and is reported herein for wavelengths of 1550 nm. Specific indication of the wavelength will be made when referring to mode field diameter herein. Unless otherwise specified, mode field diameter refers to the $LP_{01}$ mode at the specified wavelength.

Mode field diameter is a measure of the size of the optical field of the fiber and is related to the diameter of the fiber core. In particular, mode field diameter is defined as the radial position where the intensity of the optical field of the fiber is at $e^{-2}$ of the peak intensity. Traditionally, mode field diameter is greater than the physical diameter of the core, which means that some optical power is guided by the fiber cladding.

The optical fibers disclosed herein include a core region, a cladding region surrounding the core region, and a coating surrounding the cladding region. The core region and cladding region are each formed of glass. The cladding region may include multiple concentric regions. In some embodiments, the multiple regions include one or more trench regions comprising a depressed-index cladding region. The coating may include at least a primary coating and a secondary coating. Furthermore, the optical fibers disclosed herein may be single-mode optical fibers or few-mode optical fibers or quasi-single mode optical fibers.

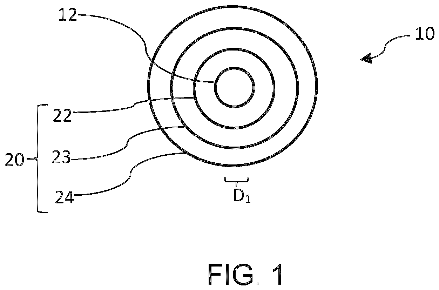

FIG. 1 depicts a cross-section of an exemplary optical fiber 10. As shown in FIG. 1, fiber 10 comprises a core 12 and a cladding 20 such that cladding 20 comprises an inner cladding region 22, a depressed-index cladding region 23 (trench region), and an outer cladding region 24. In some embodiments, depressed-index cladding region 23 is positioned between inner cladding region 22 and outer cladding region 24 in a radial direction. Core 12 may be a glass body formed of, for example, silica glass. In embodiments, core 12 comprises pure silica glass devoid of any dopants. In other embodiments, core 12 may comprise a small amount of dopants to lower the glass viscosity of the core such as, for example, germanium (e.g., $GeO_2$), phosphorus (e.g., $P_2O_5$), , chlorine (Cl), fluorine (F) and/or an alkali metal such as potassium (K), as discussed further below. In some embodiments, core 12 comprises only small amounts of any up-dopant.

Inner cladding region 22 surrounds core 12 such that inner cladding region 22 is continuously disposed between core 12 and outer cladding region 24. Depressed-index cladding region 23 surrounds inner cladding region 22 such that depressed-index cladding region 23 is disposed between outer cladding region 24 and inner cladding region 22. And outer cladding region 24 surrounds depressed-index cladding region 23. Core 12 may have a higher relative refractive index than cladding 20. Thus, the refractive index of core 12 ($\Delta_{1max}$), the refractive index of inner cladding region 22 ($\Delta_2$), the refractive index of depressed-index cladding region 23 ($\Delta_3$), and the refractive index of outer cladding region 24 ($\Delta_4$) follow the relations $\Delta_{1max} > \Delta_2$ and $\Delta_{1max} > \Delta_3$ and $\Delta_{1max} > \Delta_4$. Furthermore, in some embodiments, $\Delta_{1max} > \Delta_2 > \Delta_3$ and $\Delta_{1max} > \Delta_4 > \Delta_3$. It is also contemplated in some embodiments that $\Delta_2 = \Delta_4$. As also discussed further below, the refractive index of core 12 ($\Delta_{1max}$) may be about 0%. In some embodiments, inner cladding region 22 has a discernible core-cladding boundary with core 12, and in other embodiments inner cladding region 22 lacks a distinct boundary with core 12.

One or more coating layers may further be disposed on outer cladding region 24 such that an outermost layer of the coating layer(s) is the outermost layer of fiber 10. The coating layer(s) may each be a polymeric material.

Core 12 may comprise one or more alkali metal dopants such that an average concentration of alkali metal dopants in core 12 is greater than or equal to about 10 ppm, or greater than or equal to about 20 ppm, or greater than or equal to about 25 ppm, or greater, than or equal to about 50 ppm, or between about 10 ppm and about 500 ppm, or between about 10 ppm and about 450 ppm, or between about 20 ppm about 400 ppm, or between about 20 ppm and about 200 ppm, or between about 20 ppm and about 100 ppm, or between about 10 ppm and about 200 ppm, or between about 10 ppm and about 100 ppm, or between about 10 ppm and about 75 ppm, or between about 10 ppm and about 50 ppm, or between about 10 ppm and about 40 ppm. The average alkali concentration in core 12 is the weighted average of the dopant in a cross-section of the core along its diameter.

In some embodiments, the concentration of the alkali metal dopants decreases with a radius of the core. Therefore, the concentration of the dopant is highest at the centerline of fiber 10. The alkali metal dopant may be, for example, one or more of potassium (K), sodium, lithium (Na), cesium (Cs), and rubidium (Rb). The alkali metal dopant may be a metal oxide of these alkali metals, such as $K_2O$, $Na_2O$, $Cs_2O$, $Rb_2O$, or mixtures thereof. In some particular embodiments, the alkali metal dopant is $K_2O$. Incorporation of the alkali metal dopant in core 12 reduces the attenuation of fiber 10. Specifically, the alkali metal dopant lowers the viscosity of core 12, which increases glass relaxation in the glass transition region of the fiber during the draw of the fiber. The increased glass relaxation of core 12 reduces the glass fictive temperature of the glass, thus causing a reduction in Rayleigh scattering and attenuation in the drawn fiber.

In some particular embodiments, the alkali metal dopant comprises potassium ($K_2O$) at a concentration that is greater than or equal to about 10 ppm, or greater than or equal to 20 ppm, or greater than or equal to about 25 ppm, or greater, than or equal to about 50 ppm, or between about 10 ppm and about 500 ppm, or between about 10 ppm and about 450 ppm, or between about 20 ppm about 400 ppm, or between about 20 ppm and about 200 ppm, or between about 20 ppm and about 100 ppm, or between about 10 ppm and about 200 ppm, or between about 10 ppm and about 100 ppm, or between about 10 ppm and about 75 ppm, or between about 10 ppm and about 50 ppm, or between about 10 ppm and about 40 ppm.

Core 12 may further comprise other dopants in addition to the alkali metal dopant. For example, core 12 may comprise one or more halide dopants such as, for example, chlorine or fluorine. In embodiments, a concentration of chlorine in core 12 is from about 0.1 wt.% to about 3.0 wt.%, or about 0.2 wt.% to about 2.5 wt.%, or about 0.5 wt.% to about 2.0 wt.%, or about 1.0 wt.% to about 2.0 wt.%. Furthermore, in embodiments, a concentration of fluorine in core 12 is from about 0.04 wt.% to about 0.13 wt.%, or from about 0.06 wt.% to about 0.11 wt.%, or from about 0.08 wt.% to about 0.09 wt.%.

Cladding 20 may be doped with one or more dopants, such as a halide dopant. In some embodiments, the halide is chlorine and/or fluorine. In some particular embodiments, depressed-index cladding region 23 of cladding 20 is doped with fluorine and/or boron in order to provide the trench profile.

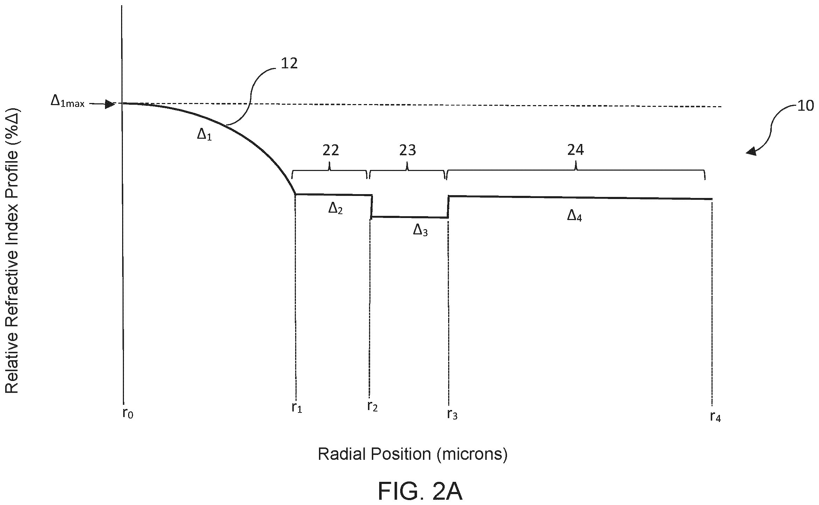

FIG. 2A plots an idealized relative refractive index profile of glass fiber 10 as the relative refractive index $\Delta$ versus the radial coordinate r. Core 12 has relative refractive index $\Delta_1$, with a maximum refractive index of $\Delta_0 = \Delta_{1max}$ at r = 0 and an $\alpha$-profile with an $\alpha$ value that is in a range of about 10.0 or less, or about 9.0 or less, or about 8.0 or less, or about 7.0 or less, or about 6.0 or less, or about 5.0 or less, or about 4.0 or less, or about 3.0 or less, or about 2.0 or less, or about 1.0 or less. In some other embodiments, the $\alpha$, value is about 5.0 or greater, or about 6.0 or greater, or about 7.0 or greater, or about 8.0 or greater, or about 9.0 or greater, or about 10.0 or greater, or about 11.0 or greater, or about 12.0 or greater, or about 13.0 or greater. In some embodiments, the core $\alpha$, value is less than about 100, or less than about 50, or less than about 20. The relative refractive index ($\Delta_{1max}$) of core 12 is in a range from about -0.35% to about 0.35%, or in a range from about -0.30% to about 0.30%, or in a range from about -0.25% to about 0.25%, or in a range from about -0.20% to about 0.20%, or in a range from about -0.15% to about 0.15%, or in a range from about -0.10% to about 0.10%, or in a range from about -0.05% to about 0.05%, or in a range from about -0.20% to about 0.35%, or in a range from about - 0.10% to about 0.35%, or in a range from about 0.00% to about 0.30%, or in a range from about 0.10% to about 0.30%, or in a range from about 0.20% to about 0.30%, or in a range from about 0.25% to about 0.30%. In some embodiments, the relative refractive index $\Delta_{1max}$ is about 0.0%.

As discussed above, inner cladding region 22 has a relative refractive index $\Delta_2$, depressed-index cladding region 23 has a relative refractive index $\Delta_3$, and outer cladding region 24 has a relative refractive index $\Delta_4$. In embodiments, the relative refractive index $\Delta_2$ of inner cladding region 22 is in a range from about -0.40% to about -0.20%, or in a range from about -0.35% to about -0.25%, or in a range from about -0.30% to about -0.20%, or in a range from about -0.25% to about -0.20%. The relative refractive index $\Delta_2$ is preferably constant or approximately constant. In embodiments, the relative refractive index $\Delta_3$ of depressed-index cladding region 23 is in a range from about -0.50% to about -0.25%, or in a range from about -0.45% to about -0.30%, or in a range from about -0.40% to about -0.35%, or in a range from about -0.35% to about -0.37%. The relative refractive index $\Delta_3$ is preferably constant or approximately constant. In embodiments, the relative refractive index $\Delta_4$ of outer cladding region 24 is in a range from about -0.40% to about -0.20%, or in a range from about -0.35% to about -0.25%, or in a range from about -0.30% to about -0.20%, or in a range from about -0.25% to about -0.20%. The relative refractive index $\Delta_4$ is preferably constant or approximately constant. As noted above, in some embodiments $\Delta_2$ is equal to $\Delta 4$.

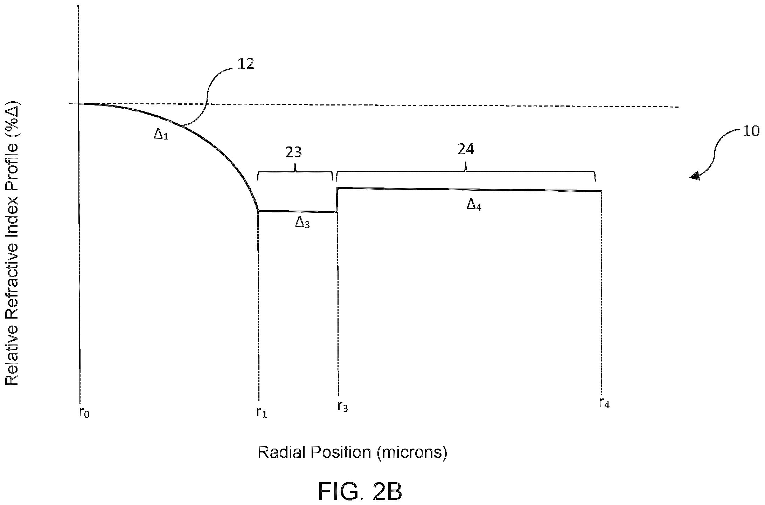

Other configurations of the relative refractive index profile are also contemplated than those specifically disclosed herein. For example, in some embodiments and as shown in FIG. 2B, optical fiber 10 does not comprise inner cladding region 22. Therefore, in these embodiments, depressed-index cladding region 23 is directly adjacent to and directly surrounds core 12 in a radial direction. Although not depicted in FIGS. 2A or 2B, in some embodiments, the relative refractive index of core 12 may have a centerline dip such that the maximum refractive index of core 12 and the maximum refractive index of the entire optical fiber 10 is located a small distance away from the centerline of core 12 rather than at the centerline of 12 (as depicted in FIGS. 2A and 2B).

As shown in FIGS. 2A and 2B, $r_1$ refers to the outer radius of core 12, $r_2$ refers to the outer radius of inner cladding region 22, $r_3$ refers to the outer radius of depressed-index cladding region 23, and $r_4$ refers to the outer radius of outer cladding region 24 (which may be the outer radius of the bare optical fiber without any coatings disposed thereon). The difference between radial position $r_2$ and radial position $r_1$ is the thickness of inner cladding region 22. The difference between radial position $r_3$ and radial position $r_2$ is the thickness of depressed-index cladding region 23. And the difference between radial position $r_4$ and radial position $r_3$ is the thickness of outer cladding region 24.

The diameter $D_1$ of core 12, which is equal to $r_1$ x2 and, as defined herein, is the point at where the higher index region meets inner cladding region 22 or meets depressed-index cladding region 23 (in embodiments that do not comprise inner cladding region 22).

In some embodiments, depressed-index cladding region 23 is a step-index profile, as shown in FIGS. 2A and 2B. In other embodiments, depressed-index cladding region 23 is triangular-shaped.

As discussed above, an object of the present disclosure is to increase the percentage of light confined to the core 12 of optical fiber, where the Rayleigh scattering coefficient is the lowest, in order to reduce the overall attenuation of the fiber. The overall attenuation of an optical fiber is dependent upon the Rayleigh scattering and the small angle scattering (SAS) of the fiber. Rayleigh scattering is the dominant factor of the total fiber attenuation of a fiber. Density variations and compositional fluctuations within regions of a fiber can affect the Rayleigh scattering within those regions. More specifically, due to the inclusion of dopants (such as fluorine) in relatively high concentrations in cladding 20, this region of optical fiber 10 has larger density variations and compositional fluctuations in comparison with core 12, which comprises dopants, if any, in much smaller concentrations as compared with cladding 20. For example, in some exemplary embodiments, depressed-index cladding region 23 of cladding 20 comprises fluorine dopant in a concentration of about 10,000 ppm, while core 12 comprises only about 10 ppm to about 100 ppm of potassium, less than about 1,300 ppm of fluorine, and less than about 3,000 ppm of chlorine. In these embodiments, cladding 20 comprises the fluorine dopant in such a large concentration that cladding 20 would have higher density variations and compositional fluctuations. However, in these embodiments, core 12 comprises the potassium, fluorine, and chlorine dopants in relatively small amounts so that the potassium, fluorine, and chlorine dopants do not produce such high compositional fluctuations in core 12 as in cladding 20. In addition, the small amounts of dopants in core 12 reduces the viscosity and the fictive temperature of the core, which reduces the Rayleigh scattering in core 12 as discussed below.

For a guide mode in an optical fiber, most light is in the core. However, a fraction of light extends in the cladding. Due to the density variations and compositional fluctuations in cladding 20, light traveling within cladding 20 has different Rayleigh scattering properties than the light traveling within core 12. In particular, light traveling within cladding 20 has greater Rayleigh scattering than light traveling within core 12. When the light propagates within cladding 20, the density variations and compositional fluctuations within this region cause a certain percentage of the light to transmit as an evanescent wave so that light propagation is reduced. In comparison to cladding 20, core 12 does not comprise dopants in as large of a concentration as in cladding 20. Furthermore, core 12 comprises an alkali metal (such as potassium), which reduces the fictive temperature of the glass and, thus, lowers density variations in this glass region. In the embodiments disclosed herein, core 12 has a lower Rayleigh scattering than cladding 20 due to the lower dopant concentration of core 12 versus cladding 20.

SAS is caused by compositional or geometric fluctuations at the core-cladding interface (the interface between core 12 and inner cladding region 22 in the embodiments that comprise inner cladding region or the interface between core 12 and depressed-index cladding region 23 in the embodiments that do not comprise inner cladding region 22). Such compositional and geometric fluctuations cause light propagating within the core to be coupled to the cladding, wherein the light can get lost by radiation through the coating. Therefore, it is also desirable to reduce optical power at the core-cladding interface to reduce overall attenuation of the optical fiber.

According to aspects of the present disclosure, in order to reduce overall attenuation in optical fiber 10, the light propagating within fiber 10 is confined more within core 12. Furthermore, the light is launched and maintained in the fundamental mode (the $LP_{01}$ mode) so that the light is not converted into higher order modes (such as the $LP_{11}$ mode), or only a very small percentage of light is converted into the higher order modes. By confining the fundamental mode within core 12, the fraction of power travelling through the core is advantageously increased so that light intensity is reduced at the core-cladding interface and in the cladding. Therefore, the percentage of light traveling through cladding 20 is greatly reduced, thus reducing Rayleigh scattering and SAS in the fiber. In some embodiments, the light is confined within the fundamental mode in core 12 by increasing the core diameter of fiber 10 so that the core diameter is larger than the mode field diameter. In some embodiments, the light is confined within the fundamental mode in core 12 by increasing the refractive index difference between the core and the cladding of fiber 10. In some embodiments, the light is confined within the fundamental mode in core 12 by increasing both the core diameter and the refractive index difference between the core and the cladding of fiber 10 so that the core diameter is larger than the mode field diameter. Furthermore, in some embodiments, optical fiber 10 comprises a relatively large mode field diameter and high cable cutoff to confine the fundamental mode within core 12. In embodiments disclosed herein, the radius $r_1$ of core 12 is increased (as compared with traditional fibers) by a larger factor than the mode field diameter. The diameter $D_1$ (such that $D_1 = r_1 \times 2$ as discussed above) of core 12 is in a range from about 12 microns to about 25 microns, or from about 14 microns to about 22 microns, or about 15 microns to about 20 microns, or about 17 microns to about 19 microns, or about 17 microns to about 23 microns, or about 17 microns to about 22 microns, or about 17 microns to about 20 microns, or about 18 microns to about 20 microns. In some embodiments, the diameter $D_1$ of core 12 is about 19.00 microns, or about 19.50 microns, or about 19.75 microns, or about 20.25 microns. It is noted that that the radius $r_1$ of core 12 is one-half of the disclosed diameter values. Additionally, the mode field diameter of the fundamental mode ($LP_{01}$) of optical fiber 10 at 1550 nm is about 11 microns or greater, or about 12 microns or greater, or about 13 microns or greater, or about 14 microns or greater, or about 15 microns or greater, or about 16 microns or greater. Additionally or alternatively, the mode field diameter of the fundamental mode ($LP_{01}$) of optical fiber 10 at 1550 nm is about 16 microns or less, or about 15 microns or less, or about 14 microns or less, or about 13 microns or less, or about 12 microns or less, or about 11 microns, or less. In embodiments, the mode field diameter of the fundamental mode ($LP_{01}$) of optical fiber 10 at 1550 nm is in a range from about 11 microns to about 16 microns, or about 12 microns to about 16 microns, or about 13 microns to about 15 microns, or about 14 microns to about 15 microns. In some embodiments, the mode field diameter of the fundamental mode ($LP_{01}$) of optical fiber 10 at 1550 nm is about 14.2 microns, or about 14.5 microns, or about 14.8 microns, or about 15.1 microns. Furthermore, in embodiments, the ratio of the diameter $D_1$ of core 12 to the mode field diameter of the fundamental mode ($LP_{01}$) of optical fiber 10 at 1550 nm is about 1.00 or greater, or about 1.05 or greater, or about 1.10 or greater, or about 1.20 or greater, or about 1.30 or greater, or about 1.40 or greater, or about 1.50 or greater, or about 1.60 or greater, or from about 1.00 to about 2.00, or about 1.05 to about 2.00, or about 1.05 to about 1.95, or about 1.05 to about 1.90, or about 1.05 to about 1.80, or about 1.05 to about 1.70, or about 1.10 to about to about 2.00, or about 1.10 to about 1.95, or about 1.10 to about 1.90, or about 1.10 to about 1.80, or about 1.10 to about 1.70, or about 1.20 to about 1.80, or about 1.30 to about 1.70, or about 1.40 to about 1.60. In some embodiments, the ratio is about 1.34, or about 1.42, or about 1.54.

By providing a larger core diameter than mode field diameter, the fundamental mode ($LP_{01}$) optical field of the light propagating within the fiber does not extend into the cladding 20 (or at least a reduced amount of light propagating within the fiber extends into the cladding 20), which in turn minimizes Rayleigh scattering. Instead, the optical field of the light is maintained within the core in the fundamental mode. In particular, in the embodiments disclosed herein, the optical field of the light strongly overlaps with core 12.

According to embodiments, the cable cutoff wavelength of the fiber is increased (as compared with traditional fibers). The higher the cable cutoff wavelength, the lower the power in the cladding and at the core-cladding interface. Therefore, it is advantageous to increase the cable cutoff wavelength to confine the light in the core to reduce attenuation. In embodiments, the cable cutoff wavelength is in a range from about 1400 nm to about 3000 nm, or from about 1500 nm to about 3000 nm, or from about 1500 nm to about 2500 nm. However, there are limits to increasing the cable cutoff wavelength. If the cutoff wavelength is much higher than the "operating wavelength" (which is typically 1500 nm), multipath interference can occur, which causes a transmission penalty to a fiber system via bit error rate. Therefore, the cable cutoff wavelength of optical fiber 10, according to some embodiments disclosed herein, is from about 1530 nm to about 2500 nm, or about 1540 nm to about 2250 nm, or about 1550 nm to about 2000 nm, or about 1560 nm to about 1700 nm, or about 1570 nm to about 1650 nm, or about 1550 nm to about 2500 nm, or about 1600 nm to about 1700 nm.

With such a high cable cutoff wavelength, optical fiber 10 may be quasi-single moded in that it could support higher order modes (such as the $LP_{11}$ mode) if the fiber were launched with an overfill launch condition. However, embodiments of the present disclosure comprise using a single mode launch so that only the fundamental mode (the LPoi) is activated to confine the activated optical power to core 12.

In some embodiments, the relative refractive index difference between core 12 and depressed-index cladding region 23 is increased in order to help confine the light within the fundamental mode with core 12. In embodiments, the difference between the relative refractive index $\Delta_{1max}$ of core 12 and the relative refractive index $\Delta_3$ of depressed index cladding region 23 is between about 0.005% to about 0.200%, or about 0.005% to about 0.150%, or about 0.010% to about 0.100%. It is also noted that the relative refractive index difference between core 12 and depressed-index cladding region 23 may be increased, as disclosed herein, along with the increased core diameter, as also disclosed herein.

As discussed herein, embodiments of the present disclosure confine the optical power of the light propagating through optical fiber 10 to the fundamental mode within core 12. Therefore, optical fiber 10 has reduced attenuation compared with traditional fibers. In embodiments, the optical fiber has an attenuation of about 0.1460 dB/km or less at a wavelength of 1550 nm. In other embodiments, the attenuation of optical fiber 10 is about 0.1455 dB/km or less, or about 0.1450 dB/km or less, or about 0.1445 dB/km or less, or about 0.1440 dB/km or less, or about 0.1435 dB/km or less, or about 0.1430 dB/km or less, or about 0.1425 dB/km or less, or about 0.1423 dB/km or less, or about 0.1422 dB/km or less, or about 0.1421 dB/km or less, or about 0.1420 dB/km or less, or about 0.1419 dB/km or less, or about 0.1418 dB/km or less, or about 0.1415 dB/km or less, or about 0.1412 dB/km or less, or about 0.1410 dB/km or less, or about 0.1409 dB/km or less, or about 0.1408 dB/km or less, or about 0.1407 dB/km or less at a wavelength of 1550 nm. In embodiments, the optical fibers have the attenuation values disclosed herein over at least 15 km of continuous fiber, or over at least 20 km of continuous fiber, or over at least 25 km of continuous fiber at a wavelength of 1550 nm.

Optical fiber 10, according to the embodiments disclosed herein has total Rayleigh scattering loss (Rt) at 1550 nm of about 0.135 dB/km or less, or about 0.130 dB/km or less, or about 0.125 dB/km or less, or about 0.120 dB/km or less, or from about 0.120 dB/km to about 0.135 dB/km, or from about 0.125 dB/km to about 0.130 dB/km. Furthermore, optical fiber 10, according to the embodiments disclosed herein, has SAS at 1550 nm of about 0.005 dB/km or less, or about 0.004 dB/km or less, or about 0.003 dB/km or less, or about 0.002 dB/km or less, or about 0.001 dB/km or less.

The Rayleigh scattering loss, as defined herein, is actually a combination of Rayleigh, Raman, and Brillouin scattering losses. But Raman and Brillouin scattering constitute a smaller portion of scattering loss, so for purposes of the present disclosure, the scattering loss will be referred to herein as Rayleigh scattering loss. For example, for a pure silica core fiber doped with potassium, the total Rayleigh scattering loss is about 0.125 dB/km at 1550 nm, while Raman and Brilluoin scattering are only about 0.008 dB/km combined, showing the small contribution that Raman and Brillouin contribute to the total Rayleigh scattering loss.

The total Rayleigh scattering loss (Rt), as defined herein, is a combination of Rayleigh scattering caused from density variations in the glass (Rd) and Rayleigh scattering caused from compositional fluctuations in the glass (Rc). The calculations for both Rd and Rc are provided below.

The Rayleigh scattering in a glass material is caused from density variations (Rd) is calculated herein using Eq. (7):

$$\mathrm{Rd} = \frac{8\pi^3}{3\lambda^4} n^8 p^2 \beta c \, \mathrm{KB} \, \mathrm{Tf} \qquad (7)$$

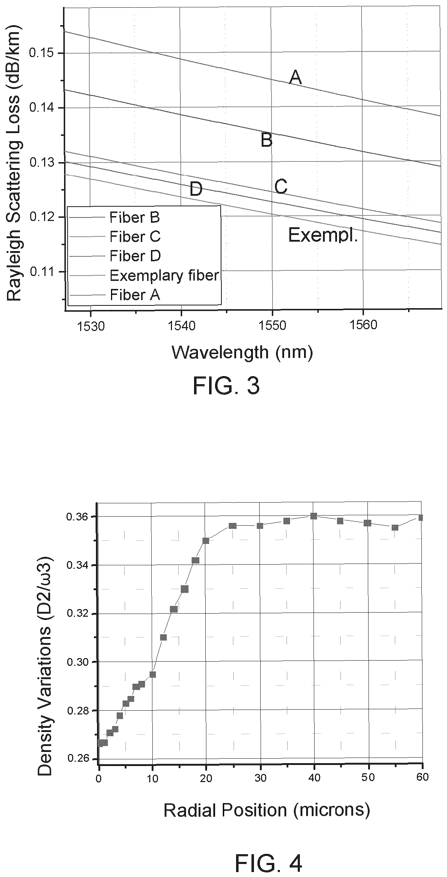

wherein Rd is the Rayleigh scattering loss caused from density variations, $\lambda$ is the wavelength (microns), n is the average refractive index of the glass material, p is the photoelastic coefficient (which is equal to 0.286), $\beta c$ is the isothermal compressibility of the glass material (which is equal to $6.8 \times 10^{-12}$ cm^2/dyn), $K_B$ is the Boltzmann constant (which is equal to $1.380649 \times 10^{-23}$ J·K$^{-1}$), and Tf is fictive temperature in K. The Rayleigh scattering caused from density variations (Rd) is mostly affected by the fictive temperature (Tf) of the glass, as shown in Eq. (7) above, which is dependent mainly upon the potassium doping of the core. The fictive temperature (Tf) in Eq. (7) above was measured using Raman spectroscopy wherein an end face of the fiber was illuminated by an He-Cd laser having a wavelength of 442 nm, and the resultant Raman scattering spectra were measured in the backscattering scattering configuration using 20 mW of power. The measurement spot was about 1.5 microns, and by translating the fiber, different radial positions of the fiber were probed. The average Raman spectra measurements for a given mode field diameter were obtained. The Raman spectra measurements were then related to structural modifications in the $SiO_2$ network of the glass to determine the fictive temperature (Tf), as described in A.E. Geissberger, PRB, vol. 28, 3266-71 (1983), which is incorporated by reference herein. As described in A.E. Geissberger, a ratio of D2 (defect symmetric stretch of three member ring of $SiO_2$ at 605 cm$^{-1}$) band area to $SiO_2$ network vibration band area at 800 cm$^{-1}$ was measured. The resulting plot is shown in FIG. 4. Then the ratio of D2/$\omega$3 was converted to fictive temperature (Tf). The calculated Rayleigh scattering caused from density variations (Rd) can also be verified by cutback spectral measurements, as are known in the art.

Eq. (7) above takes into account Rayleigh scattering loss caused from density fluctuations (Rd) of an optical fiber. Eq. (8) below takes into account Rayleigh scattering loss caused from compositional fluctuations in the glass (Rc) of the fiber. As discussed above, the relatively large dopant concentrations in the cladding cause additional Rayleigh scattering due to compositional fluctuations in the glass. In particular, Eq. (8) determines the Rayleigh scattering loss of an optical fiber due to the presence of fluorine dopant in the cladding of the fiber.

$$\mathrm{Rc} = C \frac{\int_0^\infty \mathrm{F}(r)\big(f(r)\big)^2 r\,dr}{\int_0^\infty (f(r))^2 r\,dr} \qquad (8)$$

where Rc is the Rayleigh scattering loss caused from compositional fluctuations at 1550 nm (dB/km), F(r) is the radial distribution concentration of fluorine in the fiber, C is the coefficient for fluorine concentration fluctuation (which is equal to 0.143 dB/km/micron$^4$/wt.%), f(r) is the transverse component of the electric field of the guided optical signal for the fundamental mode (which is calculated as discussed above), and r is the radial position in the fiber (microns).

The total Rayleigh scatting loss (Rt) is the combination of the Rayleigh scatting caused from density variations (Rd) and the Rayleigh scattering caused from compositional fluctuations (Rc), as shown in Eq. (9):

$$Rt = Rc + Rd \qquad\qquad (9)$$

As discussed above, the total Rayleigh scattering loss (Rt) at 1550 nm for the optical fibers disclosed herein is about 0.135 dB/km or less. The Rayleigh scattering caused from compositional fluctuations in the glass (Rc) is about 0.006 dB/km or less, or about 0.005 dB/km or less, or about 0.004 dB/km or less, or about 0.003 dB/km or less, or about 0.002 dB/km or less, or about 0.001 dB/km or less.

SAS, as used herein, is measured by placing the optical fiber to be measured in two separate angular scattering measurement setups. The first setup measures a wide-angle component and the second setup measures a small angle component. The wide-angle setup is comprised of a half cylinder made of high purity fused silica (HPFS). The half cylinder is thoroughly polished on all sides to minimize surface roughness. A flat part of the cylinder is painted black except for a small aperture at the center. The optical fiber under study is stripped of its protective polymer coating and is placed within a groove in a black steel plate. The fiber-steel plate assembly is then covered by the HPFS half cylinder. An index matching gel is used to eliminate an air gap, if any, between the half cylinder and the optical fiber. The angular distribution of scattering is measured by an InGaAs optical detector moving in a semicircular motion in a plane containing the fiber. The wide-angular range measured in this first setup is from 20 degrees to 160 degrees.

An entirely different setup is used for measuring the small-angular range from 0 degrees to 30 degrees. In this setup, the fiber is placed between two HPFS stacked roof prisms, each prism having a first base side angle of 90° and a second base side angle of 135°, the base side angles being measured with respect to a bottom surface of the prisms. The length and the height of the prisms are each 10 cm and 5 cm, respectively. A planoconvex HPFS lens is positioned on top of the upper prism. All air gaps between the two prisms, optical fiber, and the lens are eliminated by the index matching gel. An angled surface of the bottom prism, which is formed by the second base side angle of 135°, is coated with silver so that it is reflective. The light scattered from the fiber is reflected from the angled surface and subsequently refracted by the planoconvex HPFS lens. The InGaAs optical detector is placed at the focal plane of the lens and is scanned along the fiber. Forward and backward angles ranging from 0 to 30 degrees relative to the propagation direction of the light in the fiber are focused onto different locations on the focal plane. The detector directly reads and stores the scattered intensity as a function of distance from the center of the lens.

Next, the data from the first and second setups are plotted as a function of scattering angle (degrees) vs. scattering at 1550 nm (a.u.). In this example, for the fibers disclosed herein, the plotted data from the first and second setups overlap within the angular range of 15 degrees to 30 degrees. It is noted that the data from the two setups discussed above are very different from each other due to different scales at which the measurements were collected. Therefore, scattering within the overlap angular range of 15 degrees to 30 degrees is used to scale the two functions together to build the full scattering function over the range of 0 degrees to 180 degrees. This provides the measured SAS of the optical fiber.

The optical fibers disclosed herein have an effective area, at 1550 nm wavelength, of about 75 micron$^2$ or greater, or about 78 micron$^2$ or greater, or about 80 micron$^2$ or greater, or about 82 micron$^2$ or greater, or about 85 micron$^2$ or greater, or about 87 micron$^2$ or greater, or about 100 micron$^2$ or greater, or about 125 micron$^2$ or greater, or about 150 micron$^2$ or greater, or about 175 micron$^2$ or greater, or about 200 micron$^2$ or greater. Additionally or alternatively, the effective area, at 1550 nm wavelength, is about 200 micron$^2$ or less, or about 175 micron$^2$ or less, or about 150 micron$^2$ or less, or about 125 micron$^2$ or less, or about 100 micron$^2$ or less, or about 95 micron$^2$ or less, or about 90 micron$^2$ or less, or about 85 micron$^2$ or less. In some embodiments, the effective area, at 1550 nm wavelength, is in range between 75 micron$^2$ and about 200 micron$^2$, or about 100 micron$^2$ and about 175 micron$^2$, or about 125 micron$^2$ and about 150 micron$^2$.

According to aspects of the present disclosure, the optical fibers have a dispersion at 1550 nm of less than about 22 ps/nm/km and a dispersion slope at 1550 nm of less than about 0.1 ps/nm$^2$/km. For example, the dispersion at 1550 nm is from about 10 ps/nm/km to about 22 ps/nm/km, about 10 ps/nm/km to about 22 ps/nm/km, about 10 ps/nm/km to about 20 ps/nm/km, about 10 ps/nm/km to about 15 ps/nm/km, about 15 ps/nm/km to about 22 ps/nm/km, or about 15 ps/nm/km to about 20 ps/nm/km. For example, the dispersion at 1550 is about 10 ps/nm/km, about 15 ps/nm/km, about 16 ps/nm/km, about 17 ps/nm/km, about 17.5 ps/nm/km, about 18 ps/nm/km, about 19 ps/nm/km, about 19.5 ps/nm/km, about 19.6 ps/nm/km, about 20 ps/nm/km, about 20.1 ps/nm/km, about 22 ps/nm/km, or any value between these values. In some examples, the dispersion slope at 1550 nm is about 0.04 ps/nm$^2$/km to about 0.1 ps/nm$^2$/km, about 0.05 ps/nm$^2$/km to about 0.1 ps/nm$^2$/km, about 0.055 ps/nm$^2$/km to about 0.1 ps/nm$^2$/km, about 0.06 ps/nm$^2$/km to about 0.1 ps/nm$^2$/km, about 0.08 ps/nm$^2$/km to about 0.1 ps/nm$^2$/km, about 0.04 ps/nm$^2$/km to about 0.08 ps/nm$^2$/km, about 0.05 ps/nm$^2$/km to about 0.08 ps/nm$^2$/km, about 0.055 ps/nm$^2$/km to about 0.08 ps/nm$^2$/km, about 0.06 ps/nm$^2$/km to about 0.08 ps/nm$^2$/km, about 0.04 ps/nm$^2$/km to about 0.06 ps/nm$^2$/km, about 0.05 ps/nm$^2$/km to about 0.06 ps/nm$^2$/km, or about 0.055 ps/nm$^2$/km to about 0.06 ps/nm$^2$/km. For example, the dispersion slope at 1550 nm is about 0.04 ps/nm$^2$/km, about 0.05 ps/nm$^2$/km, about 0.055 ps/nm$^2$/km, about 0.057 ps/nm$^2$/km, about 0.058 ps/nm$^2$/km, about 0.059 ps/nm$^2$/km, about 0.06 ps/nm$^2$/km, about 0.061 ps/nm$^2$/km, about 0.07 ps/nm$^2$/km, or about 0.08 ps/nm$^2$/km.

Table 1 below shows the Rayleigh scattering loss, SAS, and attenuation for four comparative fibers (comparative fibers A, B, C, and D) and for exemplary fiber 1. As also shown in Table 1 below, exemplary fiber 1 has a large core diameter of 19 microns and a mode field diameter of 14.2 microns. Therefore, the diameter of exemplary fiber 1 is larger than its mode field diameter. Conversely, comparative fiber A has a core diameter of 11 microns and a mode field diameter of 12.4 microns, comparative fiber B has a core diameter of 9 microns and a mode field diameter of 10.5 microns, comparative fiber C has a core diameter of 11.5 microns and a mode field diameter of 12.1 microns, and comparative fiber D has a core diameter of 12.5 microns and a mode field diameter of 13.8 microns. Each of the comparative fibers has a smaller core diameter than its mode field diameter. Table 2 below provides the relative refractive index values for exemplary fiber 1 and for the comparative fibers A-D.

Table 1

| | Core Diameter (microns) | Mode Field Diameter (microns) | Cable Cutoff Wavelength (nm) | Potassium Dopant Concentration in Core (ppm) | Rayleigh Scattering Loss at 1550 nm - Rc (dB/km) | Rayleigh Scattering Loss at 1550 nm - Rd (dB/km) | Total Rayleigh scattering Loss at 1550 nm - Rt (dB/km) | SAS at 1550 nm (dB/km) | Total Attenuation (dB/km) at 1550 nm |
|---|---|---|---|---|---|---|---|---|---|
| Comparative Fiber A | 11 | 12.4 | 1410 | 0 | 0.006 | 0.14 | 0.146 | 0.005 | 0.166 |
| Comparative Fiber B | 9 | 10.5 | 1200 | 60 | 0.01 | 0.125 | 0.135 | 0.0045 | 0.156 |
| Comparative Fiber C | 11.5 | 12.1 | 1420 | 80 | 0.0055 | 0.118 | 0.1235 | 0.0025 | 0.146 |
| Comparative Fiber D | 12.5 | 13.8 | 1480 | 80 | 0.0045 | 0.118 | 0.1225 | 0.002 | 0.145 |
| Exemplary Fiber 1 | 19 | 14.2 | 2400 | 80 | 0.002 | 0.118 | 0.1200 | 0.001 | 0.1407 |

Table 2

|  | Core Relative Refractive Index $\Delta_{1max}$ (%) | Depressed-Index Cladding Region Relative Refractive Index $\Delta_3$ (%) |
|---|---|---|
| Comparative Fiber A | 0.35 | 0.00 |
| Comparative Fiber B | 0.32 | -0.05 |
| Comparative Fiber C | 0.30 | -0.025 |
| Comparative Fiber D | 0.25 | -0.02 |
| Exemplary Fiber 1 | 0.31 | -0.05 |

As shown in Table 1, exemplary fiber 1 has a larger core diameter than mode field diameter and, therefore, has the lowest attenuation at 0.1407 at a wavelength of 1550 nm. Furthermore, comparative fiber A does not comprise potassium dopant in the core and has a larger than attenuation than comparative fibers B-D and exemplary fiber 1, each of which comprises a potassium doped core, showing that the potassium dopant also plays a role in the attenuation of the fiber. It is also noted that exemplary fiber 1 has as larger cable cutoff than any of the exemplary fibers.

FIG. 3 shows a plot of total Rayleigh scattering loss (Rt) in exemplary fiber 1 and in comparative fibers A-D at different wavelengths. Exemplary fiber 1 has the lowest total Rayleigh scattering loss overall.

FIG. 4 shows, as discussed above, the ratio of D2/ω3 vs. radial position along a fiber. In particular, as shown in FIG. 4, the ratio of D2/ω3 increases, along with fictive temperature, as the radial position moves further from the center of the fiber core due to the alkali dopant concentration distribution in the fiber. When moving radially outward from the center of the fiber core, the alkali dopant increases, thus increasing the density variations, which increases the ratio D2/ω3 and fictive temperature.

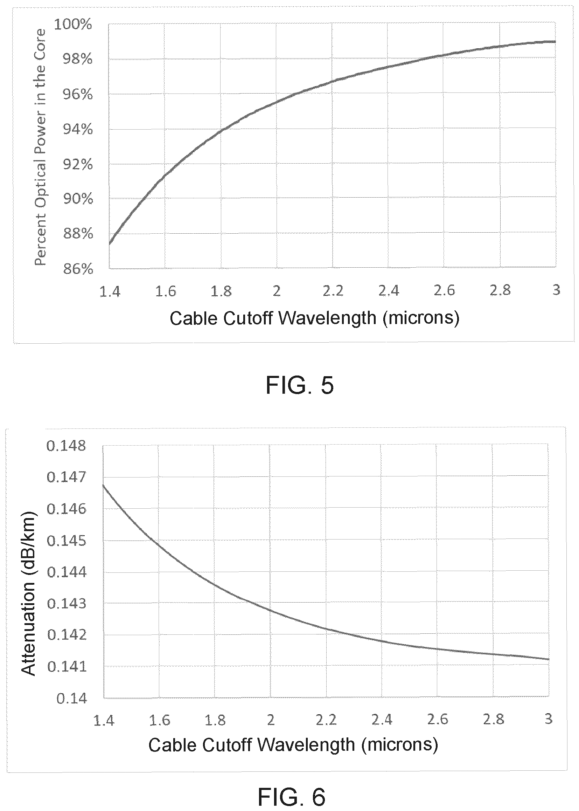

FIG. 5 shows the correlation between cable cutoff wavelength (mm) and percent optical power in the core based on an optical fiber produced according to the embodiments disclosed herein. The exemplary fiber had a core with refractive index $\Delta_{1max}$ of about 0% and radius $r_1$ of 6.7 microns, a depressed-index cladding region with average refractive index $\Delta_3$ of about -0.35% and radius $r_3$ of 21.2 microns, and an outer cladding region with refractive index $\Delta_4$ of about -0.25% and radius $r_4$ of 23.1 microns. The core was doped with 80 ppm of potassium, and the depressed-index cladding region was doped with fluorine. To increase the cable cutoff wavelength, the profile dimensions of the fiber were scaled with a factor from 1 to 2.25 to change the cable cutoff wavelength of the fiber, and the cable cutoff wavelength, the optical power in the core, and the change in attenuation were calculated using a fiber modeling tool. As shown in FIG. 5, as the cable cutoff wavelength increases of the exemplary fiber, the power in the core also increases. As a result, the power in the cladding region is reduced, which reduces overlap between optical power and fluorine doped glass with higher Rayleigh scattering. The increased power in the core and reduced power in the cladding results in lower fiber attenuation. FIG. 6 further shows the correlation between cable cutoff wavelength (microns) and attenuation (dB/km) for the same exemplary fiber discussed with reference to FIG. 5. As shown in FIG. 6, as cable cutoff wavelength increases, the attenuation in the fiber decreases. In particular, when the cable cutoff wavelength is greater than 2.3 microns, the attenuation is below 0.142 dB/km.

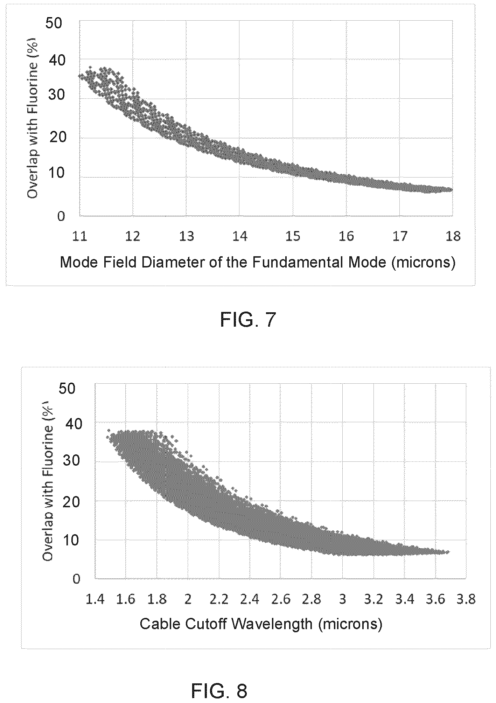

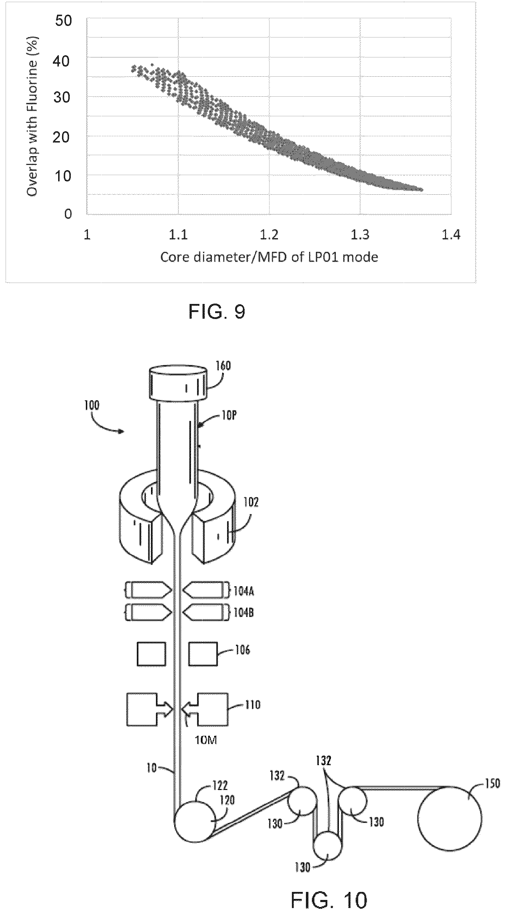

In other embodiments in which the fibers disclosed herein do not comprise fluorine dopant in the core but comprise fluorine dopant only in the cladding, FIG. 7 shows the mode field diameter of the fundamental mode (the $LP_{01}$ mode) of these fibers as the optical power overlaps with the fluorine dopant. In generating results of FIG. 7, optical fibers were used that each comprised an ideal profile design with a core, a trench, and an outer cladding, as shown in FIG. 2B. Each segment in the profile of the fibers had a step index profile. The core maximum relative refractive index $\Delta_{1max}$ was about 0%, the core radius $r_1$ was from 6 microns to 12 microns, the relative refractive index $\Delta_3$ of the depressed-index cladding region was from about -0.45% to about 0.35%, the radius $r_3$ of the depressed-index cladding region was from 15 microns to 22 microns, the relative refractive index $\Delta_4$ of the outer cladding region was from about - 0.35% to about -0.30%. The optical profile dimension of the optical fibers were varied in accordance with these range to produce a total of 20,000 data points for FIG. 7, which corresponded to 20,000 different refractive index profiles. The trend of FIG. 7 shows that the mode field diameter of the fundamental mode increases as the optical power overlap with fluorine dopant decreases. FIG. 8 similarly shows the fiber cable cutoff wavelength of these fibers as the optical power overlaps with the fluorine dopant. The trend of FIG. 8 shows that the cable cutoff wavelength increases as the fluorine dopant decreases. FIG. 9 further shows the ratio of core diameter over the mode field diameter of the fundamental (LP01) mode of these fibers versus the optical power overlap with the fluorine dopant. As shown in FIG> 9, a larger ratio of core diameter over the mode field diameter of LP01 mode reduces the overlap. As discussed before, a decrease in the optical power overlap with fluorine doped cladding translates to lower total attenuation in fiber. The results shown in FIGS. 7-9 indicate that a fiber with a larger mode field diameter and a higher cable cutoff wavelength can reduce the power overlap with fluorine, thus lowering the fiber attenuation.

13

*Exemplary Processes*

The fibers disclosed herein are made by a vapor deposition process, such as an outside vapor deposition (OVD) or modified chemical vapor deposition (MCVD) process including the processes disclosed in U.S. Patent No. 6,611,647 and U.S. Patent No. 6,477,305, which are both incorporated by reference herein. An exemplary OVD process comprises forming a silica-containing glass tube. An alkali metal (such as potassium) may be deposited on the inside of the tube by flowing alkali metal vapor through the tube and heating the tube from the outside using a traversing burner. The traversing burner heats the glass tube from the outside inward and facilitates diffusion of the alkali metal into the glass tube. The glass tube should be heated to a temperature sufficient to promote rapid diffusion of the alkali metal and to prevent devitrification. In some embodiments, the tube is heated to a temperature of at least about 1500°C, or at least about 1700°C, or at least about 2000°C.

The alkali metal may diffuse into the soot deposition layer to a depth of about 100 microns, or at least about 300 microns, or at least about 500 microns, or between about 100 microns and about 500 microns from an inside surface of the tube. The alkali metal oxide diffuses to a depth of between about 100 microns and 500 microns from the inside diffusion surface of the tube prior to collapse of the tube.

The resulting silica glass tube, and any additional glass deposited therein, is "essentially free of water" such that "water" refers to the hydroxyl group OH. Water is responsible for an absorption peak at or about 1383 nm, which may extend into the telecommunication operating wavelength regions of an optical fiber. This peak may have a detrimental effect on the fiber attenuation. Therefore, it is desirable to reduce the absorption peak, also referred to as the water peak, by reducing the OH content of the glass tube as much as possible. Preferably, the glass tube contains less than about 100 ppb by wt. OH, and more preferably less than about 20 ppb by wt. To ensure that the glass tube is essentially free of water prior to diffusing the alkali metal oxide dopant, conventional chlorine drying techniques may be employed during manufacture of the glass tube.

The diffusion of the alkali metal into the soot deposition layer may then be followed by a heating step to partially collapse the glass tube and to consolidate the glass tube. By partially collapsing the glass tube, the surface area of an inner portion of the glass tube is reduced. Alkali metal can potentially move outward from the optical fiber through this inner portion of the fiber. The reduction in surface area of the inner portion helps to reduce any such movement of the alkali metal out of the fiber. Therefore, the partial collapse of the glass tube helps to reduce loss of the alkali metal.

Next, the glass tube is etched with an etchant suitable for removing silica glass. The glass tube may be etched to a depth sufficient to remove unwanted impurities. In some embodiments, an HF solution or a fluoride gas may be used as the etchant. After the etching step, the glass tube is then further heated with a heat source to collapse the tube and form an alkali-doped silica glass rod. This step may further comprise depositing additional layers of silica soot on the glass rod to form a glass body. At the end of this step, the produced alkali-doped silica glass body is the precursor to core 12 in the drawn optical fiber.

Additional layers of silica glass and dopants may then be deposited on the glass body to form the cladding layers. For example, the additional layers of silica glass may be doped with a halide such as fluorine. Inner cladding region 22, depressed-index cladding region 23, and outer cladding region 24 may be formed on the core portion of the preform by the deposition of these additional layers of silica soot. In embodiments, the additional layers of silica soot may be formed by sleeving with a silica glass tube (either a glass tube or soot tube), depositing silica glass soot by chemical vapor deposition, both sleeving and chemical deposition, or through other methods as are known in the art. The additional layers of silica soot to form inner cladding region 22, depressed-index cladding region 23, and outer cladding region 24 may take several additional deposition steps to achieve the desired thickness, wherein after each deposition step, the silica soot is dried, halide doped, and consolidated. The halide dopant in inner cladding region 22, depressed-index cladding region 23, and outer cladding region 24 may be provided to the silica glass as a halide-containing gas. After the final consolidation step, a preform precursor is formed.

After consolidation of the silica soot, the preform precursor is then consolidated to form a final optical fiber preform. At this point, the completed optical fiber preform may be drawn into an optical fiber.

FIG. 10 is a schematic diagram of an exemplary optical fiber drawing system 100 used to fabricate optical fiber 10. As shown in FIG. 10, drawing system 100 may comprise a draw furnace 102 for heating an end of preform 10P to its glass melt temperature (e.g., to about 2000 °C), non-contact measurement sensors 104A and 104B for measuring the size of the drawn optical fiber 10 as it exits the draw furnace (e.g., diameter control), a cooling station 106 to cool the drawn optical fiber 10, a coating station 110 that coats the drawn optical fiber 10 with a non-glass coating material 10M to form a protective coating on the fiber, a tensioner 120 to pull (draw) optical fiber 10, guide wheels 130 to guide the drawn optical fiber 10, and a fiber take-up spool ("spool") 150 to store the drawn optical fiber 10. Tensioner 120 has a surface 122 and guide wheels 130 have surfaces 132 over which the drawn optical fiber 10 passes. Drawing system 10 also includes a preform holder 160, which is located adjacent the top side of draw furnace 102 and holds the co-doped preform 10P used to form the co-doped fiber 10.

Tensioner 122 may pull (draw) optical fiber 10 at different drawing speeds. In embodiments disclosed herein, optical fiber 10 was produced by pulling the fiber at a draw speed of less than or equal to about 20 m/s or less than or equal to about 15 m/s. The draw speed may be greater than or equal to about 10 m/s, or greater than or equal to about 15 m/s, or greater than or equal to about 20 m/s. In some embodiments, the draw speed is between about 10 m/s and about 20 m/s.

According to a first aspect, an optical fiber comprising a core comprised of silica and cladding surrounding the core, wherein the optical fiber has an attenuation at 1550 nm of about 0.1420 dB/km or less.

According to a second aspect, the optical fiber of the first aspect, wherein the attenuation of the optical fiber at 1550 nm is about 0.1410 dB/km or less.

According to a third aspect, the optical fiber of the first aspect, wherein the optical fiber has the attenuation at 1550 nm of about 0.1420 dB/km or less over at least 22 km of continuous optical fiber.

According to a fourth aspect, the optical fiber of the first aspect, wherein a diameter of the core is larger than a fundamental mode field diameter of the optical fiber at a wavelength of 1550 nm.

According to a fifth aspect, the optical fiber of the first aspect, wherein a ratio of the core diameter to the fundamental mode field diameter is about 1.05 or greater.

According to a sixth aspect, the optical fiber of the fifth aspect, wherein the ratio is from about 1.05 to about 1.20.

According to a seventh aspect, the optical fiber of the fifth aspect, wherein the ratio is from about 1.10 to about 1.20.

According to an eight aspect, the optical fiber of the first aspect, wherein a diameter of the core is in a range from about 12 microns to about 25 microns.

According to a ninth aspect, the optical fiber of the first aspect, wherein a fundamental mode field diameter of the optical fiber at 1550 nm is in a range from about 11 microns to about 16 microns.

According to a tenth aspect, the optical fiber of the first aspect, wherein the cable cutoff wavelength of the optical fiber is from about 1500 nm to about 3000 nm.

According to an eleventh aspect, the optical fiber of the tenth aspect, wherein the cable cutoff wavelength of the optical fiber is from about 1530 nm to about 2500 nm.

According to a twelfth aspect, the optical fiber of the first aspect, wherein the total Rayleigh scattering loss of the optical fiber at 1550 nm is about 0.135 dB/km or less.

According to a thirteenth aspect, the optical fiber of the first aspect, wherein the small angle scattering loss of the optical fiber at 1550 nm is about 0.004 dB/km or less.

According to a fourteenth aspect, the optical fiber of the first aspect, wherein the fiber is a single mode fiber.

According to a fifteenth aspect, the optical fiber of the first aspect, wherein the fiber is a quasi-single mode fiber.

According to a sixteenth aspect, an optical fiber comprising a core comprised of silica doped with an alkali dopant and cladding surrounding the core, wherein a diameter of the core is larger than a fundamental mode field diameter of the optical fiber at a wavelength of 1550 nm, and wherein the optical fiber has an attenuation at 1550 nm of about 0.146 dB/km or less.

According to a seventeenth aspect, the optical fiber of the sixteenth aspect, wherein the attenuation of the optical fiber at 1550 nm is about 0.145 dB/km or less.

According to an eighteenth aspect, the optical fiber of the seventeenth aspect, wherein the attenuation of the optical fiber at 1550 nm is about 0.144 dB/km or less.

According to a nineteenth aspect, the optical fiber of the eighteenth aspect, wherein the attenuation of the optical fiber at 1550 nm is about 0.142 dB/km or less.

According to a twentieth aspect, the optical fiber of the sixteenth aspect, wherein the alkali dopant comprises potassium.

According to a twenty-first aspect, the optical fiber of the twentieth aspect, wherein the alkali dopant comprises potassium at a concentration greater than or equal to about 10 ppm.

According to a twenty-second aspect, the optical fiber of the twenty-first aspect, wherein the alkali dopant comprises potassium at a concentration greater than or equal to about 10 ppm and less than or equal to about 200 ppm.

According to a twenty-third aspect, the optical fiber of the sixteenth aspect, wherein the cladding comprise a fluorine dopant.

According to a twenty-fourth aspect, the optical fiber of the sixteenth aspect, wherein the core comprises a relative refractive index from about 0.00% to about 0.35%.

According to a twenty-fifth aspect, the optical fiber of the sixteenth aspect, wherein a ratio of the core diameter to the fundamental mode field diameter is about 1.05 or greater.

According to a twenty-sixth aspect, the optical fiber of the twenty-fifth aspect, wherein the ratio is from about 1.05 to about 1.20.

According to a twenty-seventh aspect, the optical fiber of the sixteenth aspect, wherein a diameter of the core is in a range from about 12 microns to about 25 microns.

According to a twenty-eighth aspect, the optical fiber of the sixteenth aspect, wherein the fundamental mode field diameter of the optical fiber at 1550 nm is in a range from about 11 microns to about 16 microns.

According to a twenty-ninth aspect, the optical fiber of the sixteenth aspect, wherein the cable cutoff wavelength of the optical fiber is from about 1500 nm to about 3000 nm.

According to a thirtieth aspect, the optical fiber of the twenty-ninth aspect, wherein the cable cutoff wavelength of the optical fiber is from about 1530 nm to about 2500 nm.

According to a thirty-first aspect, the optical fiber of the sixteenth aspect, wherein the total Rayleigh scattering loss of the optical fiber at 1550 nm is about 0.135 dB/km or less.

According to a thirty-second aspect, the optical fiber of the sixteenth aspect, wherein the small angle scattering loss of the optical fiber at 1550 nm is about 0.004 dB/km or less.

According to a thirty-third aspect, the optical fiber of the sixteenth aspect, wherein the fiber is a single mode fiber.

According to a thirty-fourth aspect, the optical fiber of the sixteenth aspect, wherein the optical fiber is quasi-single mode.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the spirit or scope of the invention. Since modifications combinations, subcombinations and variations of the disclosed embodiments incorporating the spirit and substance of the invention may occur to persons skilled in the art, the invention should be construed to include everything within the scope of the appended claims and their equivalents.

**Claims**

1. An optical fiber comprising:

   a core comprised of silica and cladding surrounding the core,
   wherein the optical fiber has an attenuation at 1550 nm of about 0.1420 dB/km or less, and wherein a diameter of the core is larger than a fundamental mode field diameter of the optical fiber at a wavelength of 1550 nm.

2. The optical fiber of claim 1, wherein the attenuation of the optical fiber at 1550 nm is about 0.1410 dB/km or less.

3. The optical fiber of claim 1, wherein the optical fiber has the attenuation at 1550 nm of about 0.1420 dB/km or less over at least 22 km of continuous optical fiber.

4. The optical fiber of any of the preceding claims, wherein a ratio of the core diameter to the fundamental mode field diameter is about 1.05 or greater.

5. The optical fiber of claim 4, wherein the ratio is about from about 1.05 to about 1.20 or wherein the ratio is from about 1.10 to about 1.20.

6. The optical fiber of any one of claims 1-5, wherein a diameter of the core is in a range from about 12 microns to about 25 microns.

7. The optical fiber of any one of claims 1-6, wherein a fundamental mode field diameter of the optical fiber at 1550 nm is in a range from about 11 microns to about 16 microns.

8. The optical fiber of any one of claims 1-7, wherein a cable cutoff wavelength of the optical fiber is from about 1500 nm to about 3000 nm or from about 1530 nm to about 2500 nm.

9. The optical fiber of any one of claims 1-8, wherein a total Rayleigh scattering loss of the optical fiber at 1550 nm is about 0.135 dB/km or less.

10. The optical fiber of any one of claims 1-9, wherein a small angle scattering loss of the optical fiber at 1550 nm is about 0.004 dB/km or less.

11. The optical fiber of any one of claims 1-10, wherein the fiber is a single mode fiber or wherein the fiber is a quasi-single mode fiber.

12. The optical fiber of any of the claims 1-11, wherein the core is doped with an alkali dopant, wherein the alkali dopant preferably comprises potassium.

13. The optical fiber of claim 12, wherein the alkali dopant comprises potassium at a concentration greater than or equal to about 10 ppm, preferably greater than or equal to about 10 ppm and less than or equal to about 200 ppm.

14. The optical fiber of any one of claims 1-13, wherein the cladding comprises a fluorine dopant.

15. The optical fiber of any one of claims 1-14, wherein the core comprises a relative refractive index from about 0.00% to about 0.35%.

FIG. 1

FIG. 2A

FIG. 2B

Relative Refractive Index Profile (%Δ)

Radial Position (microns)

FIG. 3

FIG. 4

FIG. 5

FIG. 6

FIG. 7

FIG. 8

FIG. 9

FIG. 10

Europäisches
Patentamt

European
Patent Office

Office européen
des brevets

## EUROPEAN SEARCH REPORT

**Application Number**

EP 24 20 1010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/399810 A1 (LI MING-JUN [US] ET AL) 23 December 2021 (2021-12-23) * paragraphs [0033], [0035], [0037], [0046], [0049] * | 1-15 | INV. G02B6/036 ADD. C03B37/014 C03B37/018 |
| A | US 2022/283363 A1 (LOGUNOV STEPHAN LVOVICH [US] ET AL) 8 September 2022 (2022-09-08) * paragraphs [0038], [0043], [0090] * * claim 1 * | 12,13 | |
| A | US 2021/294028 A1 (SAKUMA HIROTAKA [JP] ET AL) 23 September 2021 (2021-09-23) * figure 2 * * paragraphs [0007], [0015] * | 12,13 | |
| A | US 2016/168008 A1 (BOOKBINDER DANA CRAIG [US] ET AL) 16 June 2016 (2016-06-16) * figure 9 * | 9 | |
| A | US 2016/304392 A1 (BOOKBINDER DANA CRAIG [US] ET AL) 20 October 2016 (2016-10-20) * table 5 * | 9 | TECHNICAL FIELDS SEARCHED (IPC) |
| A | KATSUSUKE TAJIMA ET AL: "LOW RAYLEIGH SCATTERING P2O5-F-SIO2 GLASSES", JOURNAL OF LIGHTWAVE TECHNOLOGY, IEEE, USA, vol. 10, no. 11, 1 November 1992 (1992-11-01), pages 1532-1535, XP000355276, ISSN: 0733-8724, DOI: 10.1109/50.184889 | 1-15 | G02B C03B |

-/--

The present search report has been drawn up for all claims

| Place of search | Date of completion of the search | Examiner |
|---|---|---|
| The Hague | 21 October 2024 | Zakynthinos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TAMURA YOSHIAKI ET AL: "The First 0.14-dB/km Loss Optical Fiber and its Impact on Submarine Transmission", JOURNAL OF LIGHTWAVE TECHNOLOGY, IEEE, USA, vol. 36, no. 1, 1 January 2018 (2018-01-01), pages 44-49, XP011677744, ISSN: 0733-8724, DOI: 10.1109/JLT.2018.2796647 [retrieved on 2018-02-15] <br> - - - - - | 1-15 | |

**TECHNICAL FIELDS SEARCHED (IPC)**

The present search report has been drawn up for all claims

| Place of search | Date of completion of the search | Examiner |
|---|---|---|
| The Hague | 21 October 2024 | Zakynthinos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1010

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | | Publication date | Patent family member(s) | | Publication date |
|---|---|---|---|---|---|---|
| US 2021399810 | A1 | | 23-12-2021 | CN | 113348637 A | 03-09-2021 |
| | | | | EP | 3888272 A1 | 06-10-2021 |
| | | | | TW | 202037100 A | 01-10-2020 |
| | | | | US | 2021399810 A1 | 23-12-2021 |
| | | | | WO | 2020112347 A1 | 04-06-2020 |
| US 2022283363 | A1 | | 08-09-2022 | CN | 117177948 A | 05-12-2023 |
| | | | | EP | 4301709 A1 | 10-01-2024 |
| | | | | JP | 2024512311 A | 19-03-2024 |
| | | | | US | 2022283363 A1 | 08-09-2022 |
| | | | | WO | 2022187195 A1 | 09-09-2022 |
| US 2021294028 | A1 | | 23-09-2021 | CN | 112955792 A | 11-06-2021 |
| | | | | EP | 3896502 A1 | 20-10-2021 |
| | | | | JP | WO2020121774 A1 | 28-10-2021 |
| | | | | US | 2021294028 A1 | 23-09-2021 |
| | | | | WO | 2020121774 A1 | 18-06-2020 |
| US 2016168008 | A1 | | 16-06-2016 | CN | 107428591 A | 01-12-2017 |
| | | | | EP | 3227243 A2 | 11-10-2017 |
| | | | | JP | 6905465 B2 | 21-07-2021 |
| | | | | JP | 2018503580 A | 08-02-2018 |
| | | | | RU | 2017123207 A | 09-01-2019 |
| | | | | US | 2016168008 A1 | 16-06-2016 |
| | | | | US | 2019256400 A1 | 22-08-2019 |
| | | | | WO | 2016089733 A2 | 09-06-2016 |
| US 2016304392 | A1 | | 20-10-2016 | CN | 107810436 A | 16-03-2018 |
| | | | | CN | 113009619 A | 22-06-2021 |
| | | | | EP | 3283909 A1 | 21-02-2018 |
| | | | | JP | 6817957 B2 | 20-01-2021 |
| | | | | JP | 7190236 B2 | 15-12-2022 |
| | | | | JP | 2018516386 A | 21-06-2018 |
| | | | | JP | 2021067952 A | 30-04-2021 |
| | | | | US | 2016304392 A1 | 20-10-2016 |
| | | | | US | 2018002221 A1 | 04-01-2018 |
| | | | | WO | 2016168042 A1 | 20-10-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6611647 B

- US 6477305 B

**Non-patent literature cited in the description**

- **T. A. LENAHAN**. Calculation of modes in an optical fiber using a finite element method and EISPACK. *Bell Syst. Tech. J.*, February 1983, vol. 62 (1), 2663

- **A.E. GEISSBERGER**. *PRB*, 1983, vol. 28, 3266-71